# EUROPEAN PATENT SPECIFICATION

(11) **EP 3 319 368 B1**
(45) Date of publication and mention of the grant of the patent: **31.07.2019**
(21) Application number: 15896999.8
(22) Date of filing: 12.11.2015
(51) Int. Cl.: H04W 72/04, H04L 1/16, H04L 1/18, H04L 5/00, H04W 60/04

(54) **RETRANSMISSION CONTROL METHOD AND APPARATUS IN A MULTI-USER SHARED ACCESS PROCESS, USER EQUIPMENT AND STORAGE MEDIUM**
RÜCKÜBERTRAGUNGSSTEUERUNGSVERFAHREN UND -VORRICHTUNG IN EINEM GEMEINSAMEN MEHRBENUTZERZUGANGSVERFAHREN, BENUTZERGERÄT UND SPEICHERMEDIUM
PROCÉDÉ ET APPAREIL DE COMMANDE DE RETRANSMISSION DANS UN PROCÉDÉ D'ACCÈS PARTAGÉ MULTI-UTILISATEUR, ÉQUIPEMENT UTILISATEUR ET SUPPORT D'INFORMATIONS

(30) Priority: 01.07.2015 CN 201510381361
(43) Date of publication of application: 09.05.2018
(73) Proprietor: ZTE Corporation, Shenzhen, Guangdong 518057 (CN)
(72) Inventor: ZOU, Wei, Shenzhen Guangdong 518057 (CN); ZHANG, Fang, Shenzhen Guangdong 518057 (CN); YU, Yong, Shenzhen Guangdong 518057 (CN); XIA, Shuqiang, Shenzhen Guangdong 518057 (CN)
(74) Representative: Brevalex
(86) International application number: PCT/CN2015/094491
(87) International publication number: WO 2017/000471

(56) References cited:
- EP-B1- 2 238 704
- WO-A1-2013/149390
- CN-A- 101 772 039
- CN-A- 104 253 673
- US-A1- 2013 114 570
- ZTE: "Considerations on 5G Key technologies & Standardization", 3GPP DRAFT; RWS-150024 CONSIDERATIONS ON 5G KEY TECHNOLOGIES & STANDARDIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , 2 September 2015 (2015-09-02), XP051043738, Retrieved from the Internet: URL:http://www.3gpp.org/ftp/workshop/2015- 09-17_18_RAN_5G/Docs/ [retrieved on 2015-09-02]

## Description

### TECHNICAL FIELD

The disclosure relates to a wireless communication technology, and in particular to a retransmission control method and apparatus in a Multiple User Shared Access (MUSA) process, a User Equipment (UE), and a storage medium.

### BACKGROUND

Rapid development of mobile internet, internet of things and other service applications has become a main driving force for promoting the development of a 5th Generation (5G) mobile communication technology. They urge that the 5G mobile communication technology has an access rate matching an optical fiber, a connectivity of one hundred billion devices, a perfect real-time experience, and a capability of making a wireless broadband access anytime and anywhere. Besides, important indexes such as energy consumption efficiency, spectral efficiency and peak rate also need to be taken into overall consideration during design of a 5G system. An IMT-2020 promoting group was founded in 2013 to promote the development of a 5G technology, it is expected, according to an international overall situation, that a 5G vision, a key capacity need and a spectrum planning will be formed in 2015, and then 5G standard operations will be initiated and become commercially available after 2020. In terms of international standards, a Long Term Evolution-Advanced (LTE-Advanced) technical standard is mainly made by a 3rd Generation Partnership Project (3GPP) international standardization organization. The industry preliminarily considers that 5G-oriented standard researches will be initiated in a stage of 3GPP R14.

In a future mobile network, service traffic demands will continuously increase, and the number and type of terminals will be increased continuously and explosively. As one of important scenarios and technical means of 5G, a Machine Type Communication (MTC) is drawing more attention. In general, the MTC has four mainstream demands: massive connection, low energy consumption, low delay and high reliability. In terms of connection quantity, the user capacity needing to be supported by a future 5G system may reach 0.3 to 3 million UEs in each cell, capable of covering 99.99% of regions. In terms of energy consumption, the 5G system needs to prolong the service life of a battery of a UE by 10 times relative to the existing battery to reach 5 to 10 years. In terms of delay, the 5G system needs to reduce an end-to-end delay by 5 times to make it reach 5ms minimally, herein an air interface delay reaches 1ms minimally. In terms of reliability, reliability requirements of a safety-related message are up to 99.999%. During practical application, according to specific situations, different applications may have different demand combination forms, which may be one of the above four demands, or may be different combinations thereof or even may include all of the four demands.

An uplink MUSA technology is a multiple-user access technology compatible with an Orthogonal Frequency Division Multiplexing (OFDM) system, characterized by performing multiple-user transmission on the same OFDM channel resource. For example, different uplink users may utilize an orthogonal or quasi-orthogonal spreading sequence having low correlation characteristics to spread data, and then transmit the data on an OFDM channel. At a receiving end, information of each user may be separated by using a linear processing and code-block-level Successive Interference Cancellation (SIC) technology, so as to achieve the purpose of simultaneous uplink transmission of multiple users. In the above SIC process, a code block having a maximum Signal-to-Interference- and-Noise Ratio (SINR) is decoded each time, and this signal is eliminated by reconstruction. The main objective of spreading by adopting a quasi-orthogonal sequence is to increase the number (large number of quasi-orthogonal code words) of users capable of transmitting data simultaneously, and to fully utilize SIC processing of the receiving end to eliminate interference between different users, thereby expanding the overall channel capacity.

When a user has data to be sent, each MUSA user may directly send quasi-orthogonally spread data on a designated uplink resource region. After receiving the data, a base station utilizes an SIC technology to receive data from multiple users simultaneously. However, in most cases, the data of all the users cannot be correctly received at the same time, some data may be correctly received by the base station, and some data cannot be correctly received. So, the base station should send an Acknowledgement (ACK) message to the user of which the data is correctly received, and after receiving the ACK message, the user sends next data. If the user does not receive the ACK message of the base station within a period of time, it will be regarded that the data sent previously is not received by the base station, and then a data retransmission flow is initiated until the data is correctly received or a retransmission count reaches a certain pre-defined maximum retransmission count. That is a general process of a Hybrid Automatic Repeat-reQuest (HARQ).

WO 2013/149390A1 disclosed measures for realizing configuration of an enhanced physical hybrid automatic repeat request indicator channel (ePHICH).

US 2013/114570A1 disclosed a method for a terminal to transmit uplink (UL) data in a wireless access system.

In an LTE system, a base station indicates a receiving state of each uplink transmitted data in a Physical HARQ Indicator CHannel (PHICH). However, each ACK indicator in the PHICH corresponds to the position of a radio resource occupied during data transmission with the user. When an MUSA is introduced into the LTE system, since data may be transmitted by a large number of users on the same resource block simultaneously, it is required that the PHICH supports a large number of ACK indicators corresponding to the same resource position. When there are more MUSA users, the total number of ACK indicators in a required PHICH will be very large. Similar requirements are not made on other LTE transmitted resource blocks in the same subframe, thus causing huge waste of PHICH capacity. Hence, a mode of ACK indicators in one-to-one correspondence to resource positions of a traditional PUICH is unlikely to be applied to an MUSA-based multiple-user access technology.

### SUMMARY

To solve the above-mentioned technical problems, the embodiments of the disclosure provide a retransmission control method and apparatus in an MUSA process, a UE, and a storage medium.

The features of the retransmission control method, retransmission control apparatus, UE and storage medium according to the present disclosure are defined in the independent claims, and the preferable features according to the present disclosure are defined in the dependent claims.

The technical solutions in the embodiments of the disclosure provide a new ACK indicating mode, fully supporting a capability of simultaneous access of a large number of users brought by an MUSA. The technical solutions in the embodiments of the disclosure may further include, in addition to an MUSA system, any other access technology supporting to share the same OFDM channel resource to perform multiple-user transmission. Specifically, a unique MUSA number is allocated to a UE. An MUSA data packet sent by the UE within an uplink MUSA resource range instructed by a base station is received. A radio resource block for transmitting ACK information is indicated by using an MUSA-RNTI. The MUSA number of the UE having a data packet that is correctly received is broadcast in the indicated radio resource block, so that the UE determines, according to the MUSA number, whether to retransmit the MUSA data packet that has been sent. Obviously, a new data acknowledgment indicating method may smoothly complete retransmission control in an MUSA in an LTE system, the influences that the number of ACK indicators of a PHICH in a traditional LTE system is limited and the ACK indicators correspond to resource positions are overcome, the capability of simultaneous access of a large number of users provided by an MUSA can be fully utilized, and simultaneous access of a huge number of users is supported. Secondly, a great number of ACK indicators accessed by the MUSA are independent, thereby avoiding the influence of huge MUSA transmission on a traditional PHICH, and avoiding waste of a traditional PHICH capacity. In addition, UE-based selection of an MUSA spreading sequence of an MUSA number provided in the embodiments of the disclosure may also provide a non-conflict uplink access mode, thereby improving the reliability of an uplink MUSA access, and reducing the delay of MUSA transmission. This plays a very positive role in high-reliability and low-delay MTC transmission. Finally, the technical solutions in the embodiments of the disclosure can be completely compatible with a traditional LTE system.

### BRIEF DESCRIPTION OF DRAWINGS

FIG. 1 shows a flowchart of a retransmission control method in an MUSA access according to an embodiment 1 of the disclosure.
FIG. 2 shows a flowchart of a retransmission control method in an MUSA access according to an embodiment 2 of the disclosure.
FIG. 3 illustrates a communication diagram of an uplink MUSA according to an embodiment of the disclosure.
FIG. 4 illustrates a function module diagram of a Mobility Management Entity (MME) expanding an MUSA configuration function according to an embodiment of the disclosure.
FIG. 5 shows an allocation flowchart of an MUSA number under a Radio Resource Control (RRC) connection state according to an embodiment of the disclosure.
FIG. 6 shows a flowchart of MUSA retransmission control according to an embodiment of the disclosure.
FIG. 7 shows an update flowchart of an MUSA number under an RRC connection state according to an embodiment of the disclosure.
FIG. 8 shows an update flowchart of an MUSA number under an idle state according to an embodiment of the disclosure.
FIG. 9 shows a flowchart of directly allocating, by a base station, an MUSA number to a user under an RRC connection state.
FIG. 10 illustrates a structure composition diagram of a retransmission control apparatus in an MUSA access according to an embodiment of the disclosure.
FIG. 11 illustrates a structure composition diagram of a UE according to an embodiment of the disclosure.

### DETAILED DESCRIPTION

In order to be capable of understanding the features and technical contents of the embodiments of the disclosure in more detail, implementation of the embodiments of the disclosure will be elaborated below with the drawings. The appended drawings are only used for reference without limitations to the embodiments of the disclosure.

The embodiments of the disclosure design a new data acknowledgment indicating mode, fully supporting a capability of simultaneous access of a large number of users brought by an MUSA. For this, the embodiments of the disclosure allocate a unique MUSA number within a cell or a certain region to each UE firstly. As an implementation manner, the user may select a certain MUSA spreading sequence or a certain group of MUSA spreading sequences according to the allocated MUSA number to transmit an MUSA data packet. When a base station correctly receives an MUSA data packet of a certain UE, the MUSA data packet of the UE is broadcast to serve as a message ACK indicator. In addition, in order to indicate resources used for broadcasting an MUSA number, the embodiments of the disclosure introduce a new RNTI: MUSA-RNTI. Finally, the embodiments of the disclosure provide an MUSA number update process to support the mobility of users.

In the embodiments of the disclosure, a unique MUSA number within a cell or a certain region (such as a tracking region) is allocated to each UE. The number may be uniformly allocated by an MME or a base station or other management entities in an Evolved Packet Core (EPC), so as to ensure the uniqueness thereof within a cell or a certain region. As an implementation manner, the other management entities in the EPC may be a certain independent MUSA management entity. As long as a UE is within a cell or a pre-scheduled effective region, regardless of an idle state or a connection state of the UE, the MUSA number is always effective. As an implementation manner, when the MME or the other management entities in the EPC allocate the MUSA number, an effective range of the number is indicated, herein the effective range may be a cell or a tracking region, or may be a group of cells or tracking regions. When the effective range is a group of cells or tracking regions, it can be expressed by a cell number list or a tracking region number list. Once the UE finds that it moves out of a specified effective range, the UE will initiate an MUSA number update flow. As an implementation manner, when the effective range for the MUSA number is the same as the tracking region, update of the MUSA number may be contained in a traditional tracking region update flow.

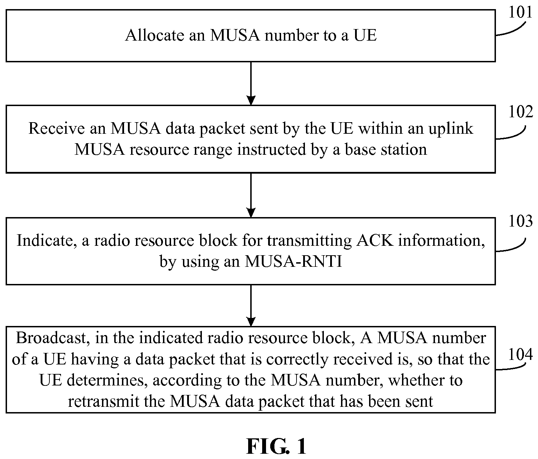

FIG. 1 shows a flowchart of a retransmission control method in an MUSA access according to an embodiment 1 of the disclosure. As shown in FIG. 1, the retransmission control method in an MUSA process includes the steps as follows.

In step 101, an MUSA number is allocated to a UE.

In the embodiment of the disclosure, an initial allocation process of an MUSA number to a UE is implemented by means of the following specific steps.
(1) After finding that both a UE and a network support an MUSA access technology and determines that there is a relevant MUSA uploading demand, the UE sends an MUSA number configuration request message to a base station. As an implementation manner, the MUSA number configuration request message may contain an MUSA capability indicator of a UE, an MUSA service demand indicator, a mobility feature indicator of a UE and the like. The MUSA number configuration request message may be an independent RRC message, or may be contained in other RRC messages.
(2) The base station transmits an MUSA number configuration request message to an MME or other management entities in an EPC. The MUSA number configuration request message may be an independent Non-Access Stratum (NAS) signaling message, or may be contained in other NAS signaling messages.
(3) The MME or the other management entities in the EPC send an MUSA number configuration message to the base station. As an implementation manner, the MUSA number configuration message may contain an allocated MUSA number, an effective range of an MUSA number, an MUSA capability indicator of a UE accepted by a network, an MUSA service demand indicator of a UE accepted by a network, and the like. The MUSA number configuration message may be an independent NAS signaling message, or may be contained in other NAS signaling messages.
(4) The base station transmits an MUSA number configuration message to the UE. The MUSA number configuration message may be an independent RRC message, or may be contained in other RRC messages.
(5) The UE sends an MUSA number configuration complete message, and starts to transmit MUSA data based on a new allocated MUSA number. The MUSA number configuration complete message may be an independent RRC message, or may be contained in other RRC messages.
(6) The base station transmits an MUSA number configuration complete message to the MME or the other management entities in the EPC. The MUSA number configuration complete message may be an independent NAS signaling message, or may be contained in other NAS signaling messages.

In step 102, an MUSA data packet sent by the UE within an uplink MUSA resource range instructed by a base station is received.

In the embodiment of the disclosure, a certain UE sends an MUSA data packet within an uplink MUSA resource range instructed by the base station. The base station receives the MUSA data packet within the uplink MUSA resource range. As an implementation manner, the UE may select an MUSA spreading sequence according to the allocated MUSA number to perform uplink transmission on the MUSA data packet.

In step 103, a radio resource block for transmitting ACK information is indicated by using an MUSA-RNTI.

In the embodiment of the disclosure, the base station indicates, a radio resource block for transmitting ACK information in a subsequent downlink subframe, by using an MUSA-RNTI according to a number of MUSA data packets that are correctly received at the same time.

In step 104, the MUSA number of the UE having a data packet that is correctly received is broadcast in the indicated radio resource block, so that the UE determines, according to the MUSA number, whether to retransmit the MUSA data packet that has been sent.

In the embodiment of the disclosure, the MUSA number of the UE having a data packet that is not correctly received is broadcast in the indicated radio resource block.

In the embodiment of the disclosure, when a single UE transmits multiple data packets in an MUSA resource block, besides the MUSA number of the UE having a data packet that is correctly received is broadcast in the indicated radio resource block, a serial number of the MUSA data packet that is correctly received is further broadcast in the indicated radio resource block, so as to acknowledge transmission of the multiple data packets of the UE respectively.

In the embodiment of the disclosure, the UE may also determine, according to the serial number of the received MUSA data packet, whether to retransmit multiple MUSA data packets that have been sent.

In the embodiment of the disclosure, a data packet may be retransmitted in a synchronous retransmission or asynchronous retransmission mode. A retransmission mode adopted by the UE may be a default mode arranged by a system, or may be indicated in a radio resource indicated by the MUSA-RNTI.

In the embodiment of the disclosure, an MUSA number update request message sent by the UE is received; an MUSA number update accepting message is sent to the UE, the MUSA number update accepting message including: a new allocated MUSA number, an effective range of a new MUSA number, an MUSA capability indicator of a UE accepted by a network, and an MUSA service demand indicator of a UE accepted by a network; and the UE is enabled to update the MUSA number according to the MUSA number update accepting message and transmit the MUSA data packet based on the updated MUSA number.

In the embodiment of the disclosure, an update process of an MUSA number is implemented by means of the following specific steps.
(1) After detecting that the UE moves out of an effective range of an MUSA number, the UE sends an MUSA number update request message to the base station. As an implementation manner, the message may contain an MUSA capability indicator of a UE, an MUSA service demand indicator, a mobility feature indicator of a UE and the like. The message may be an independent RRC message, or may be contained in other RRC messages.
(2) The base station transmits an MUSA number update request message to an MME or other management entities in an EPC. The message may be an independent NAS signaling message, or may be contained in other NAS signaling messages.
(3) The MME or the other management entities in the EPC send an MUSA number update accepting message to the base station. As an implementation manner, the message may contain a new allocated MUSA number, an effective range of a new MUSA number, an MUSA capability indicator of a UE accepted by a network, an MUSA service demand indicator of a UE accepted by a network, and the like. The message may be an independent NAS signaling message, or may be contained in other NAS signaling messages.
(4) The base station transmits an MUSA number update accepting message to the UE. The message may be an independent RRC message, or may be contained in other RRC messages.
(5) The UE sends an MUSA number update complete message, and starts to transmit MUSA data based on a new MUSA number. The message may be an independent RRC message, or may be contained in other RRC messages.
(6) The base station transmits an MUSA number update complete message to the MME or the other management entities in the EPC. The message may be an independent NAS signaling message, or may be contained in other NAS signaling messages.

As an implementation manner, when an effective range of an MUSA number may be the same as a tracking region, update of the MUSA number may also be contained in a traditional tracking region update flow. In this case, it is only necessary to contain contents of a relevant signaling message in each existing signaling updated by the tracking region.

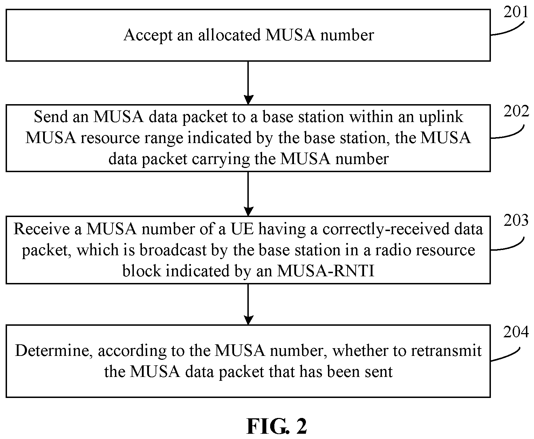

FIG. 2 shows a flowchart of a retransmission control method in an MUSA access according to an embodiment 2 of the disclosure. As shown in FIG. 2, the retransmission control method in an MUSA process includes the steps as follows.

In step 201, an allocated MUSA number is accepted.

In the embodiment of the disclosure, an initial allocation process of an MUSA number to a UE is implemented by means of the following specific steps.
(1) After finding that both a UE and a network support an MUSA access technology and determines that there is a relevant MUSA uploading demand, the UE sends an MUSA number configuration request message to a base station. As an implementation manner, the MUSA number configuration request message may contain an MUSA capability indicator of a UE, an MUSA service demand indicator, a mobility feature indicator of a UE and the like. The MUSA number configuration request message may be an independent RRC message, or may be contained in other RRC messages.
(2) The base station transmits an MUSA number configuration request message to an MME or other management entities in an EPC. The MUSA number configuration request message may be an independent NAS signaling message, or may be contained in other NAS signaling messages.
(3) The MME or the other management entities in the EPC send an MUSA number configuration message to the base station. As an implementation manner, the MUSA number configuration message may contain an allocated MUSA number, an effective range of an MUSA number, an MUSA capability indicator of a UE accepted by a network, an MUSA service demand indicator of a UE accepted by a network, and the like. The MUSA number configuration message may be an independent NAS signaling message, or may be contained in other NAS signaling messages.
(4) The base station transmits an MUSA number configuration message to the UE. The MUSA number configuration message may be an independent RRC message, or may be contained in other RRC messages.
(5) The UE sends an MUSA number configuration complete message, and starts to transmit MUSA data based on a new allocated MUSA number. The MUSA number configuration complete message may be an independent RRC message, or may be contained in other RRC messages.
(6) The base station transmits an MUSA number configuration complete message to the MME or the other management entities in the EPC. The MUSA number configuration complete message may be an independent NAS signaling message, or may be contained in other NAS signaling messages.

In step 202, an MUSA data packet is sent to a base station within an uplink MUSA resource range instructed by the base station, the MUSA data packet carrying the MUSA number.

In the embodiment of the disclosure, an MUSA spreading sequence is selected according to the allocated MUSA number to perform uplink transmission on the MUSA data packet.

In the embodiment of the disclosure, a certain UE sends an MUSA data packet within an uplink MUSA resource range instructed by the base station. The base station receives the MUSA data packet within the uplink MUSA resource range.

In step 203, the MUSA number of a UE having a correctly-received data packet, which is broadcast by the base station in a radio resource block indicated by an MUSA-RNTI, is received.

In the embodiment of the disclosure, when a single UE transmits multiple data packets in an MUSA resource block, a serial number of the MUSA data packet is further received, besides the MUSA number of the UE having a correctly-received data packet, broadcast by the base station in the radio resource block indicated by the MUSA-RNTI, is received.

In step 204, it is determined, according to the MUSA number, whether to retransmit the MUSA data packet that has been sent.

In the embodiment of the disclosure, when a single UE transmits multiple data packets in the MUSA resource block, it is determined, according to the serial number of the received MUSA data packet, whether to retransmit multiple MUSA data packets that have been sent.

In the embodiment of the disclosure, a data packet may be retransmitted in a synchronous retransmission or asynchronous retransmission mode. A retransmission mode adopted by the UE may be a default mode arranged by a system, or may be indicated in a radio resource indicated by the MUSA-RNTI.

In the embodiment of the disclosure, after it is detected that the UE moves out of an effective range for the MUSA number, an MUSA number update request message is sent to the base station; an MUSA number update accepting message sent by the base station is received, the MUSA number update accepting message including: a new allocated MUSA number, an effective range of a new MUSA number, an MUSA capability indicator of a UE accepted by a network, and an MUSA service demand indicator of a UE accepted by a network; and the MUSA number is updated according to the MUSA number update accepting message, and the MUSA data packet is transmitted based on the updated MUSA number.

In the embodiment of the disclosure, an update process of an MUSA number is implemented by means of the following specific steps.
(1) After detecting that the UE moves out of an effective range of an MUSA number, the UE sends an MUSA number update request message to the base station. As an implementation manner, the message may contain an MUSA capability indicator of a UE, an MUSA service demand indicator, a mobility feature indicator of a UE and the like. The message may be an independent RRC message, or may be contained in other RRC messages.
(2) The base station transmits an MUSA number update request message to an MME or other management entities in an EPC. The message may be an independent NAS signaling message, or may be contained in other NAS signaling messages.
(3) The MME or the other management entities in the EPC send an MUSA number update accepting message to the base station. As an implementation manner, the message may contain a new allocated MUSA number, an effective range of a new MUSA number, an MUSA capability indicator of a UE accepted by a network, an MUSA service demand indicator of a UE accepted by a network, and the like. The message may be an independent NAS signaling message, or may be contained in other NAS signaling messages.
(4) The base station transmits an MUSA number update accepting message to the UE. The message may be an independent RRC message, or may be contained in other RRC messages.
(5) The UE sends an MUSA number update complete message, and starts to transmit MUSA data based on a new MUSA number. The message may be an independent RRC message, or may be contained in other RRC messages.
(6) The base station transmits an MUSA number update complete message to the MME or the other management entities in the EPC. The message may be an independent NAS signaling message, or may be contained in other NAS signaling messages.

As an implementation manner, when an effective range of an MUSA number may be the same as a tracking region, update of the MUSA number may also be contained in a traditional tracking region update flow. In this case, it is only necessary to contain contents of a relevant signaling message in each existing signaling updated by the tracking region.

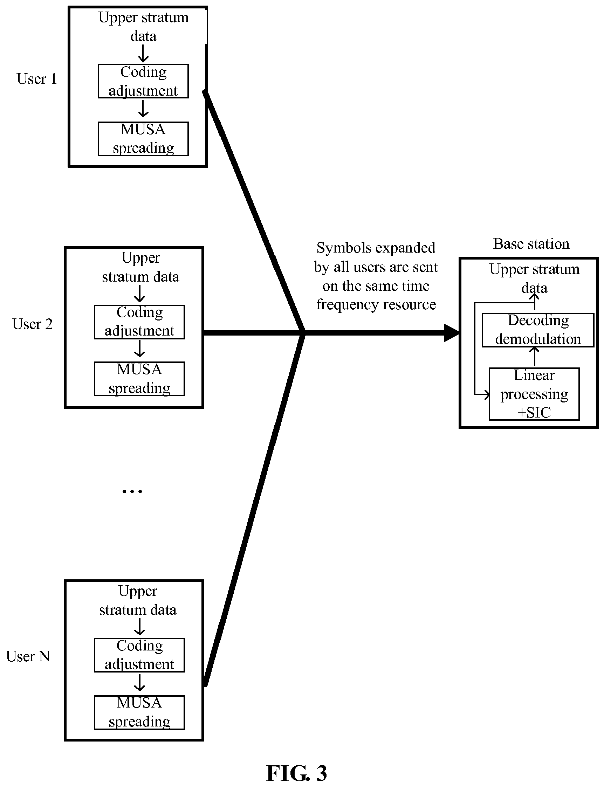

FIG. 3 illustrates a communication diagram of an uplink MUSA. An uplink MUSA technology is a multiple-user access technology compatible with an OFDM system, and is characterized in that after spreading data by using an orthogonal or quasi-orthogonal spreading sequence having low cross-correlation characteristics, different uplink users transmit the data on an OFDM channel. At a receiving end of a base station, information of each user is separated by using a linear processing and code-block-level SIC technology, so as to achieve the purpose of simultaneous uplink transmission of multiple users. In the SIC process, a code block having a maximum SINR is decoded each time, and this signal is eliminated by reconstruction. The main objective of spreading by adopting a quasi-orthogonal sequence is to increase the number (large number of quasi-orthogonal code words) of users capable of transmitting data simultaneously, and to fully utilize SIC processing of the receiving end to eliminate interference between different users, thereby expanding the overall channel capacity. As shown in the figure, after performing MUSA spreading on data, multiple users directly send spread symbols in the same uplink time frequency resource. After receiving this mixed signal, the base station recovers data of each user by means of the linear processing and SIC technology, and then uploads the data to an upper stratum processing module of the base station. It is important to note that the above user means a UE actually.

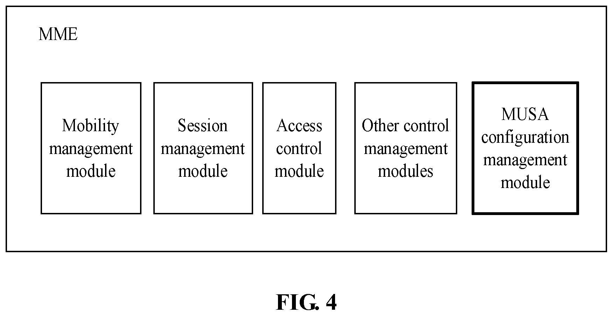

FIG. 4 illustrates a function module diagram of an MME expanding an MUSA configuration function. As shown in the figure, as a network element for MUSA configuration and MUSA number management, an MME includes a traditional mobility management module, a session management module, an access control module and other management control modules, and is added with an MUSA configuration management module, so as to manage an MUSA service and to allocate an MUSA number. Thus, the MME can allocate a unique MUSA number within a cell or a certain region to each user. As long as a user is within this region, regardless of an idle state or a connection state of the user, the MUSA number is always effective. As an implementation manner, when the MME allocates the MUSA number, an effective range of the number is indicated, herein the effective range may be a certain cell number or tracking region number, or may be a cell number list or a tracking region number list. Once the user finds that it moves out of a specified effective range, the user will initiate an MUSA number update flow. As an implementation manner, when the effective range for the MUSA number is the same as the tracking region, update of the MUSA number may be contained in a traditional tracking region update flow. It is important to note that the above user means a UE actually.

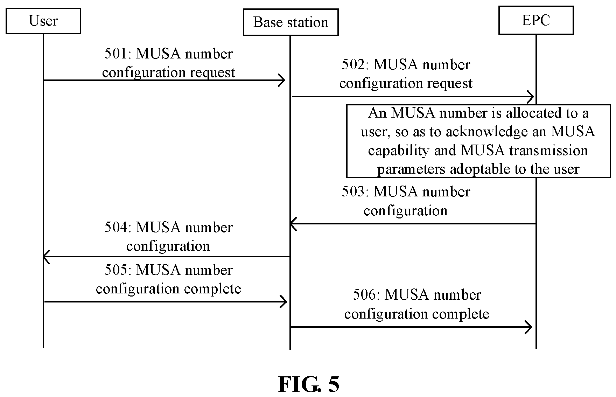

FIG. 5 shows an allocation flowchart of an MUSA number under an RRC connection state according to an embodiment of the disclosure. As shown in the figure, an allocation process of an MUSA number provided in the embodiment of the disclosure includes the steps as follows.

In step 501, after finding that both a user and a network support an MUSA access technology and determines that there is a relevant MUSA uploading demand, the user sends an MUSA number configuration request message to a base station.

As an implementation manner, the message may contain an MUSA capability indicator of a user, an MUSA service demand indicator, a mobility feature indicator of a user and the like. In the present embodiment, the message is an independent RRC message.

In step 502, the base station transmits an MUSA number configuration request message to an MME or other management entities in an EPC.

In the present embodiment, the message is an independent NAS signaling message.

In step 503, the MME or the other management entities in the EPC send an MUSA number configuration message to the base station.

As an implementation manner, the message may contain an allocated MUSA number, an effective range of an MUSA number, an MUSA capability indicator of a user accepted by a network, an MUSA service demand indicator of a user accepted by a network, and the like. In the present embodiment, the message is an independent NAS signaling message.

In step 504, the base station transmits an MUSA number configuration message to the user.

In the present embodiment, the message is an independent RRC message.

In step 505, the user sends an MUSA number configuration complete message, and starts to transmit MUSA data based on a new allocated MUSA number.

In the present embodiment, the message is an independent RRC message.

In step 506, the base station transmits an MUSA number configuration complete message to the MME or the other management entities in the EPC.

In the present embodiment, the message is an independent NAS signaling message.

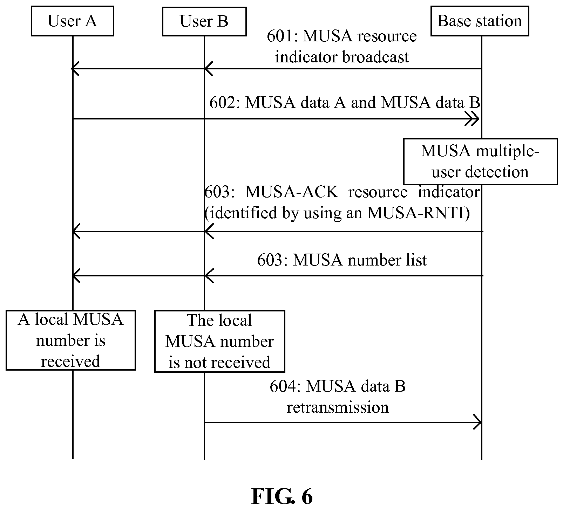

FIG. 6 shows a flowchart of an MUSA retransmission control flow according to another embodiment of the disclosure. In the figure, data uplink transmission or downlink broadcast on the same resource block is expressed by using the same horizontal plane. As shown in the figure, a retransmission control method provided in the embodiment of the disclosure includes the steps as follows.

In step 601, a base station broadcasts to notify all users of available resources for uplink MUSA transmission.

In step 602, a user A and a user B send MUSA data packets at the same time within an uplink MUSA resource range instructed by the base station. The base station receives multiple-user MUSA data within the uplink resource range.

As an implementation manner, the user may select an MUSA spreading sequence according to an allocated MUSA number to perform uplink transmission on MUSA data.

In step 603, the base station indicates, a radio resource block for transmitting ACK information in a subsequent downlink subframe, by using an MUSA-RNTI according to a number of MUSA data packets that are correctly received at the same time, and sends, in the indicated radio resource block, an MUSA number list of the user having a data packet that is correctly received.

In step 604, the user determines, according to the received MUSA number, whether to retransmit the data packet that has been sent.

As shown in the figure, the user A receives a local MUSA number in an ACK resource block instructed by the base station, and it is shown that MUSA data uploaded previously is correctly received, so that it will not retransmit the data any longer. The user B does not receive the local MUSA number, and it is shown that the MUSA data uploaded previously is not correctly received, so that it will retransmit the data in a subsequent MUSA uploading resource. As an implementation manner, the user A may also send new data in a subsequent MUSA uploading resource.

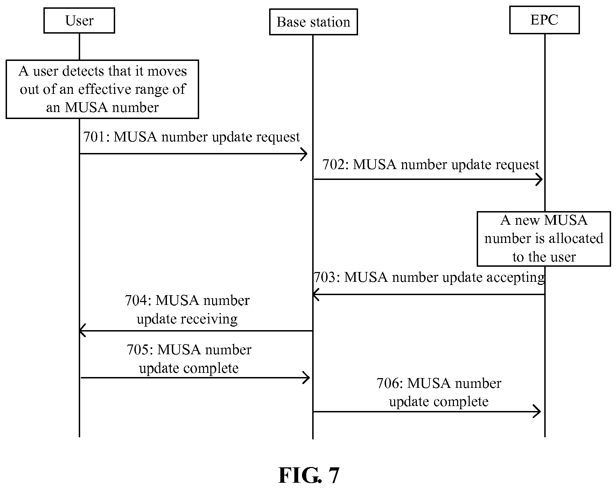

FIG. 7 shows an update flowchart of an MUSA number under an RRC connection state according to an embodiment of the disclosure. As shown in the figure, an update process of an MUSA number under an RRC connection state provided in the embodiment of the disclosure includes the steps as follows.

In step 701, after detecting that a user moves out of an effective range of an MUSA number, the user sends an MUSA number update request message to a base station.

As an implementation manner, the message may contain an MUSA capability indicator of a user, an MUSA service demand indicator, a mobility feature indicator of a user and the like. In the present embodiment, the message is an independent RRC message.

In step 702, the base station transmits an MUSA number update request message to an MME or other management entities in an EPC.

In the present embodiment, the message is an independent NAS signaling message.

In step 703, the MME or the other management entities in the EPC send an MUSA number update accepting message to the base station.

As an implementation manner, the message may contain a new allocated MUSA number, an effective range of a new MUSA number, an MUSA capability indicator of a user accepted by a network, an MUSA service demand indicator of a user accepted by a network, and the like. In the present embodiment, the message is an independent NAS signaling message.

In step 704, the base station transmits an MUSA number update accepting message to the user.

In the present embodiment, the message is an independent RRC message.

In step 705, the user sends an MUSA number update complete message, and starts to transmit MUSA data based on a new MUSA number.

In the present embodiment, the message is an independent RRC message.

In step 706, the base station transmits an MUSA number update complete message to the MME or the other management entities in the EPC.

In the present embodiment, the message is an independent NAS signaling message.

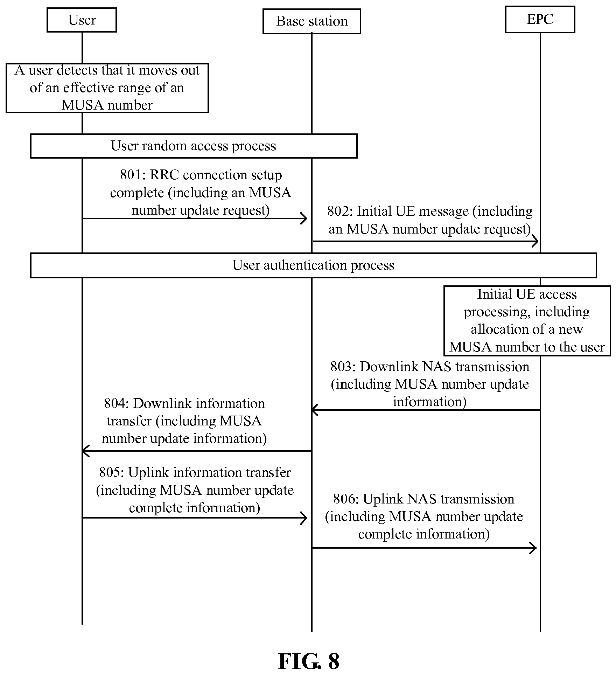

FIG. 8 shows an update flowchart of an MUSA number under an idle state according to an embodiment of the disclosure. As an implementation manner, an effective range of an MUSA number may be the same as a tracking region, and update of the MUSA number may also be contained in a traditional tracking region update flow. As shown in the figure, an update process of an MUSA number under an idle state provided in the embodiment of the disclosure includes the steps as follows.

In step 801, after detecting that a user moves out of an effective range of an MUSA number, the user reselects a new base station and initiates a random access flow. After the user completes uplink synchronization and initial access, the user carries relevant contents of an MUSA number update request in an RRC connection setup complete message sent to the base station.

As an implementation manner, the contents may include an MUSA capability indicator of a user, an MUSA service demand indicator, a mobility feature indicator of a user and the like.

In step 802, the base station transmits an initial UE message to an MME or other management entities in an EPC, and carries relevant contents of an MUSA number update request therein.

In step 803, after traditional user authentication and access processing, the MME or the other management entities in the EPC allocate a new MUSA number to the user, and send a downlink NAS transmission message to the base station, MUSA number update information being carried therein.

As an implementation manner, the update information may contain a new allocated MUSA number, an effective range of a new MUSA number, an MUSA capability indicator of a user accepted by a network, an MUSA service demand indicator of a user accepted by a network, and the like.

In step 804, the base station transmits a downlink information transfer message to the user, the above MUSA number update information being carried therein.

In step 805, after obtaining the MUSA number update information, the user sends an uplink information transfer message to the base station, MUSA number update complete information being carried therein.

Then, the user starts to perform MUSA data transmission by using a new MUSA number.

In step 806, the base station transmits an uplink NAS transmission message to the MME or the other management entities in the EPC, MUSA number update complete information being carried therein.

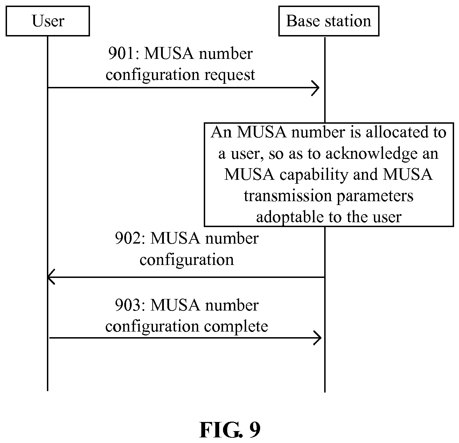

FIG. 9 shows a flowchart of directly allocating, by a base station, an MUSA number to a user under an RRC connection state. In this case, an MUSA configuration management entity is located inside a base station. As shown in the figure, an allocation process of an MUSA number provided in the embodiment of the disclosure includes the steps as follows.

In step 901, after finding that both a user and a network support an MUSA access technology and determines that there is a relevant MUSA uploading demand, the user sends an MUSA number configuration request message to a base station.

As an implementation manner, the message may contain an MUSA capability indicator of a user, an MUSA service demand indicator, a mobility feature indicator of a user and the like. In the present embodiment, the message is an independent RRC message.

In step 902, the base station sends an MUSA number configuration message after performing MUSA number configuration.

As an implementation manner, the message may contain an allocated MUSA number, an effective range of an MUSA number, an MUSA capability indicator of a user accepted by a network, an MUSA service demand indicator of a user accepted by a network, and the like. In the present embodiment, the message is an independent RRC message.

In step 903, the user sends an MUSA number configuration complete message to the base station, and starts to perform MUSA data transmission by using a new allocated MUSA number.

In the present embodiment, the message is an independent RRC message.

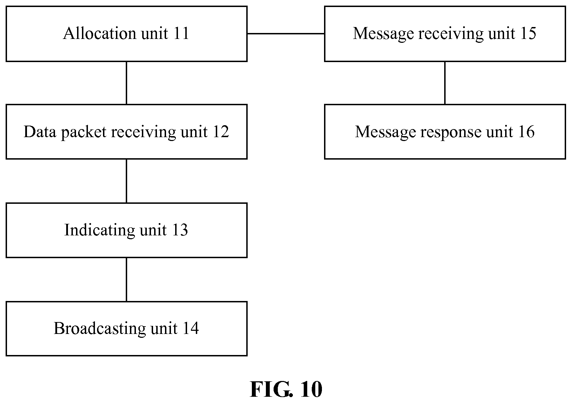

FIG. 10 illustrates a structure composition diagram of a retransmission control apparatus in an MUSA access according to an embodiment of the disclosure. As shown in FIG. 10, the retransmission control apparatus in an MUSA process, provided in the embodiment of the disclosure, includes:
an allocation unit 11 arranged to allocate an MUSA number to a UE;
a data packet receiving unit 12 arranged to receive an MUSA data packet sent by the UE within an uplink MUSA resource range instructed by a base station;
an indicating unit 13 arranged to indicate, a radio resource block for transmitting ACK information, by using an MUSA-RNTI; and
a broadcasting unit 14 arranged to broadcast, in the indicated radio resource block, the MUSA number of the UE having a data packet that is correctly received, so that the UE determines, according to the MUSA number, whether to retransmit the MUSA data packet that has been sent.

In the embodiment of the disclosure, the broadcasting unit 14 is further arranged to broadcast, in the indicated radio resource block, the MUSA number of the UE having a data packet that is not correctly received.

In the embodiment of the disclosure, the broadcasting unit 14 is further arranged to, when a single UE transmits multiple data packets in an MUSA resource block, besides broadcasting the MUSA number of the UE having a data packet that is correctly received in the indicated radio resource block, further broadcast a serial number of the MUSA data packet that is correctly received in the indicated radio resource block, so as to acknowledge transmission of the multiple data packets of the UE respectively.

In the embodiment of the disclosure, the apparatus further includes:
a message receiving unit 15 arranged to receive an MUSA number update request message sent by the UE; and
a message response unit 16 arranged to: send an MUSA number update accepting message to the UE, the MUSA number update accepting message including a new allocated MUSA number, an effective range of a new MUSA number, an MUSA capability indicator of a UE accepted by a network, and an MUSA service demand indicator of a UE accepted by a network; enable the UE to update the MUSA number according to the MUSA number update accepting message and transmit the MUSA data packet based on the updated MUSA number.

Those skilled in the art should understand that implementation functions of each unit in the retransmission control apparatus in an MUSA process as shown in FIG. 10 may be understood with reference to relevant description for the retransmission control method in an MUSA process. The retransmission control apparatus in an MUSA process as shown in FIG. 10 may be implemented by means of an MME as shown in FIG. 4.

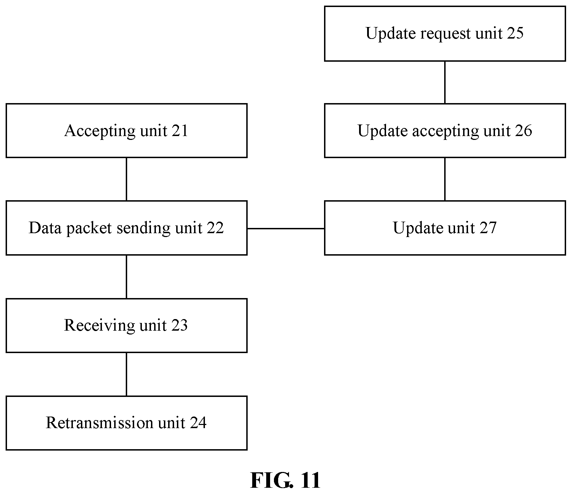

FIG. 11 illustrates a structure composition diagram of a UE according to an embodiment of the disclosure. As shown in FIG. 11, the UE provided in the embodiment of the disclosure includes:
an accepting unit 21 arranged to accept an allocated MUSA number;
a data packet sending unit 22 arranged to send an MUSA data packet to a base station within an uplink MUSA resource range instructed by a base station, the MUSA data packet carrying the MUSA number;
a receiving unit 23 arranged to receive the MUSA number of the UE having a correctly-received data packet, which is broadcast by the base station in a radio resource block indicated by an MUSA-RNTI; and
a retransmission unit 24 arranged to determine, according to the MUSA number, whether to retransmit the MUSA data packet that has been sent.

In the embodiment of the disclosure, the data packet sending unit 22 is further arranged to select an MUSA spreading sequence according to the allocated MUSA number to perform uplink transmission of the MUSA data packet.

In the embodiment of the disclosure, the receiving unit 23 is further arranged to, when a single UE transmits multiple data packets in an MUSA resource block, further receive a serial number of the MUSA data packet besides receiving the MUSA number of the UE having a correctly-received data packet, which is broadcast by the base station in the radio resource block indicated by the MUSA-RNTI; and
the retransmission unit 24 is further arranged to determine, according to the received serial number of the MUSA data packet, whether to retransmit multiple MUSA data packets that have been sent.

In the embodiment of the disclosure, the UE further includes:
an update request unit 25 arranged to send, when it is detected that the UE moves out of an effective range for the MUSA number, an MUSA number update request message to the base station;
an update accepting unit 26 arranged to receive an MUSA number update accepting message sent by the base station, the MUSA number update accepting message including: a new allocated MUSA number, an effective range of a new MUSA number, an MUSA capability indicator of a UE accepted by a network, and an MUSA service demand indicator of a UE accepted by a network; and
an update unit 27 arranged to update the MUSA number according to the MUSA number update accepting message, and transmit the MUSA data packet based on the updated MUSA number.

Those skilled in the art should understand that implementation functions of each unit in the UE as shown in FIG. 11 may be understood with reference to relevant description for the retransmission control method in an MUSA process. The functions of each unit in the UE as shown in FIG. 11 may be implemented by means of a program run on a processor, or may be implemented by means of a specific logic circuit.

The embodiment of the disclosure also provides a storage medium. The storage medium stores a computer program. The computer program is arranged to execute the retransmission control method in an MUSA process provided in each of the above-mentioned embodiments.

If being implemented in a form of software function module and sold or used as an independent product, the integrated module in the disclosure may also be stored in a computer-readable storage medium. Based on such understanding, the technical solutions in the embodiments of the disclosure substantially or parts making contributions to the conventional art may be embodied in form of software product, and the computer software product is stored in a storage medium, including a plurality of instructions used to enable computer equipment (which may be a personal computer, a server, network equipment or the like) to execute all or part of the method of the disclosure. The above-mentioned storage medium includes: various media capable of storing program codes such as a USB flash disk, a mobile hard disk, a Read-Only Memory (ROM), a Random Access Memory (RAM), a magnetic disk or an optical disk. Thus, the embodiments of the disclosure are not limited to combination of any specific hardware and software.

Correspondingly, the embodiment of the disclosure also provides a computer storage medium in which a computer program is stored. The computer program is used to execute an implementation method provided in the disclosure.

The above is only the implementation method of the disclosure, and is intended to limit the scope of protection of the disclosure.

### INDUSTRIAL APPLICABILITY

In the embodiments of the disclosure, a new data acknowledgment indicating method may smoothly complete retransmission control in an MUSA in an LTE system, the influences that the number of ACK indicators of a PHICH in a traditional LTE system is limited and the ACK indicators correspond to resource positions are overcome, a capability of simultaneous access of a large number of users provided by an MUSA can be fully utilized, and simultaneous access of a huge number of users is supported.

## Claims

1. A retransmission control method in a Multiple User Shared Access, MUSA, process, wherein the MUSA process comprises: multiple User Equipment, UEs, utilize an orthogonal or quasi-orthogonal spreading sequence having low correlation characteristics to spread data and transmit the data on an Orthogonal Frequency Division Multiplexing, OFDM, channel, the method comprising:
allocating (101), by a Mobility Management Entity, MME, an MUSA number to each one of the multiple UEs ;
receiving (102), by a base station, a data packet sent by one of the multiple UEs within an uplink MUSA resource range instructed by the base station;
indicating (103), by the base station, by using an MUSA Radio Network Temporary Identity, MUSA-RNTI, a radio resource block for transmitting Acknowledgement, ACK, information; and
broadcasting (104), by the base station, in the indicated radio resource block, the MUSA number of a UE having sent a data packet that is correctly received or the MUSA number of a UE having sent a data packet that is not correctly received, the broadcasting of the MUSA number enabling the UE to determine whether to retransmit the data packet that has been sent;
**characterized in that** the method further comprises:
receiving, by the base station, an MUSA number update request message sent by the UE; and
sending, by the base station, an MUSA number update accepting message to the UE, the MUSA number update accepting message comprising: a new allocated MUSA number, an effective range of a new MUSA number, an MUSA capability indicator of the UE, and an MUSA service demand indicator of the UE, wherein the effective range is a cell or a tracking region, or a group of cells or tracking regions; and
wherein the MUSA number update accepting message enables the UE to update the MUSA number.

2. The retransmission control method in an MUSA process according to claim 1, further comprising:
when a single UE transmits a plurality of data packets in the MUSA resource block, broadcasting the MUSA number of the UE having a data packet that is correctly received in the indicated radio resource block, further broadcasting, in the indicated radio resource block, a serial number of the data packet that is correctly received, so as to acknowledge transmission of the plurality of data packets by the UE respectively.

3. A retransmission control method in a Multiple User Shared Access, MUSA, process, wherein the MUSA process comprises: multiple User Equipment, UEs, utilize an orthogonal or quasi-orthogonal spreading sequence having low correlation characteristics to spread data and transmit the data on an Orthogonal Frequency Division Multiplexing, OFDM, channel, the method comprising:
accepting (201), by one of the multiple UEs, an allocated MUSA number;
sending (202), by the UE, a data packet to a base station within an uplink MUSA resource range instructed by the base station, the data packet carrying the MUSA number;
receiving (203), by the UE, the MUSA number of the UE, wherein the received MUSA number is broadcast by the base station in a radio resource block indicated by an MUSA Radio Network Temporary Identity, MUSA-RNTI, when the sent data packet is correctly received; and
determining (204), by the UE, according to the received MUSA number, whether to retransmit the data packet that has been sent;
**characterized in that** the method further comprises:
sending, by the UE, when it is detected by the UE that the UE moves out of an effective range for the MUSA number, an MUSA number update request message to the base station; and
receiving, by the UE, an MUSA number update accepting message sent by the base station, the MUSA number update accepting message comprising: a new allocated MUSA number, an effective range of a new MUSA number, an MUSA capability indicator of the UE, and an MUSA service demand indicator of the UE, wherein the effective range is a cell or a tracking region, or a group of cells or tracking regions; and
updating, by the UE, the MUSA number according to the MUSA number update accepting message.

4. The retransmission control method in an MUSA process according to claim 3, further comprising:
selecting an MUSA spreading sequence according to the allocated MUSA number to perform uplink transmission of the data packet.

5. The retransmission control method in an MUSA process according to claim 3, further comprising:
when a single UE transmits a plurality of data packets in an MUSA resource block, further receiving a serial number of the data packet, besides receiving the MUSA number of the UE having a correctly-received data packet, which is broadcast by the base station in the radio resource block indicated by the MUSA-RNTI; and
determining, according to the received serial number of the data packet, whether to retransmit the plurality of data packets that have been sent.

6. A retransmission control apparatus in a Multiple User Shared Access, MUSA, process, wherein the MUSA process comprises: multiple User Equipment, UEs, utilize an orthogonal or quasi-orthogonal spreading sequence having low correlation characteristics to spread data and transmit the data on an Orthogonal Frequency Division Multiplexing, OFDM, channel, the retransmission control apparatus is applied in to a base station and comprising:
an allocation unit (11) arranged to allocate an MUSA number to each one of the multiple UEs;
a data packet receiving unit (12) arranged to receive a data packet sent by one of the multiple UEs within an uplink MUSA resource range instructed by the base station;
an indicating unit (13) arranged to indicate, by using an MUSA Radio Network Temporary Identity, MUSA-RNTI, a radio resource block for transmitting Acknowledgement, ACK, information; and
a broadcasting unit (14) arranged to broadcast, in the indicated radio resource block, the MUSA number of a UE having sent a data packet that is correctly received or the MUSA number of a UE having sent a data packet that is not correctly received, the broadcasting of the MUSA number enabling the UE to determine, according to the MUSA number, whether to retransmit the data packet that has been sent;
**characterized in that** the retransmission control apparatus further comprises:
a message receiving unit (15) arranged to receive an MUSA number update request message sent by the UE; and
a message response unit (16) arranged to: send an MUSA number update accepting message to the UE, the MUSA number update accepting message comprising a new allocated MUSA number, an effective range of a new MUSA number, an MUSA capability indicator of the UE, and an MUSA service demand indicator of the UE, wherein the MUSA number update accepting message enables the UE to update the MUSA number;
wherein the effective range is a cell or a tracking region, or a group of cells or tracking regions.

7. The retransmission control apparatus in an MUSA process according to claim 6, wherein
the broadcasting unit (14) is further arranged to, when a single UE transmits a plurality of data packets in an MUSA resource block, besides broadcasting the MUSA number of the UE having a data packet that is correctly received in the indicated radio resource block, broadcast a serial number of a data packet that is correctly received in the indicated radio resource block, so as to acknowledge transmission of the plurality of data packets by the UE respectively.

8. A User Equipment, UE, comprising:
an accepting unit (21) arranged to accept an allocated Multiple User Shared Access, MUSA, number used in a MUSA process, wherein the MUSA process comprises: multiple UEs utilize an orthogonal or quasi-orthogonal spreading sequence having low correlation characteristics to spread data and transmit the data on an Orthogonal Frequency Division Multiplexing, OFDM, channel;
a data packet sending unit (22) arranged to send a data packet to a base station within an uplink MUSA resource range instructed by the base station, the data packet carrying the MUSA number;
a receiving unit (23) arranged to receive the MUSA number of the UE which is broadcast by the base station in a radio resource block indicated by an MUSA Radio Network Temporary Identity, MUSA-RNTI, wherein the received MUSA number is broadcast by the base station when the sent data packet is correctly received; and
a retransmission unit (24) arranged to determine, according to the received MUSA number, whether to retransmit the data packet that has been sent;
**characterized in that** the UE further comprises:
an update request unit (25) arranged to send, when it is detected by the UE that the UE moves out of an effective range for the MUSA number, an MUSA number update request message to the base station;
an update accepting unit (26) arranged to receive an MUSA number update accepting message sent by the base station, the MUSA number update accepting message including: a new allocated MUSA number, an effective range of a new MUSA number, an MUSA capability indicator of the UE, and an MUSA service demand indicator of the UE, wherein the effective range is a cell or a tracking region, or a group of cells or tracking regions; and
an update unit (27) arranged to update the MUSA number according to the MUSA number update accepting message.

9. The UE according to claim 8, wherein
the data packet sending unit (22) is further arranged to select an MUSA spreading sequence according to the allocated MUSA number to perform uplink transmission of the data packet.

10. The UE according to claim 8, wherein
the receiving unit (23) is further arranged to, when a single UE transmits a plurality of data packets in an MUSA resource block, further receive a serial number of the data packet besides receiving the MUSA number of the UE having a correctly-received data packet, which is broadcast by the base station in the radio resource block indicated by the MUSA-RNTI; and
the retransmission unit (24) is further arranged to determine, according to the received serial number of the data packet, whether to retransmit the plurality of data packets that have been sent.

11. A storage medium, wherein, the storage medium has stored thereon a computer program arranged to execute the retransmission control method steps performed by a base station in a Multiple User Shared Access, MUSA, process according to any one of claims 1 to 5.

## Patentansprüche

1. Rückübertragungssteuerungsverfahren in einem gemeinsamen Mehrfachnutzerzugang-, MUSA-, Verfahren, wobei das MUSA-Verfahren umfasst: eine Mehrzahl von Nutzergeräten, UEs, nutzt eine orthogonale oder quasi-orthogonale Spreizungssequenz mit niedrigen Korrelationseigenschaften zum Spreizen von Daten und Senden der Daten auf einem orthogonalen Frequenzmultiplexverfahren-, OFDM-, Kanal, wobei das Verfahren umfasst:
Zuordnen (101), durch eine Mobility Management Entity, MME, einer MUSA-Nummer zu jedem der Mehrzahl von UEs;
Empfangen (102), durch eine Basisstation, eines Datenpakets, das durch eines der Mehrzahl von UEs innerhalb eines Uplink-MUSA-Ressourcenbereichs, der durch die Basisstation angewiesen worden ist, gesendet worden ist;
Angeben (103), durch die Basisstation, unter Verwendung einer MUSA-Radio Network Temporary Identity, MUSA-RNTI, eines Funkressourcenblocks zum Senden von Bestätigungs-, ACK-, Informationen; und
Übertragen (104), durch die Basisstation in dem angegebenen Funkressourcenblock, der MUSA-Nummer eines UE, das ein Datenpaket gesendet hat, das korrekt empfangen worden ist, oder der MUSA-Nummer eines UE, das ein Datenpaket gesendet hat, das nicht korrekt empfangen worden ist, wobei es die Übertragung der MUSA-Nummer dem UE ermöglicht, zu bestimmen, ob das Datenpaket, das gesendet worden ist, rückübertragen werden soll;
**dadurch gekennzeichnet, dass** das Verfahren ferner umfasst:
Empfangen, durch die Basisstation, einer MUSA-Nummer-Aktualisierungsanfragenachricht, die durch das UE gesendet worden ist; und
Senden, durch die Basisstation, einer MUSA-Nummer-Aktualisierungsannahmenachricht zu dem UE, wobei die MUSA-Nummer-Aktualisierungsannahmenachricht umfasst: eine neue zugeordnete MUSA-Nummer, einen effektiven Bereich einer neuen MUSA-Nummer, einen MUSA-Befähigungsindikator des UE und einen MUSA-Dienstbedarfindikator des UE, wobei der effektive Bereich eine Zelle oder ein Verfolgungsbereich oder eine Gruppe von Zellen oder Verfolgungsbereichen ist; und
wobei es die MUSA-Nummer-Aktualisierungsannahmenachricht dem UE ermöglicht, die MUSA-Nummer zu aktualisieren.

2. Rückübertragungssteuerungsverfahren in einem MUSA-Verfahren nach Anspruch 1, ferner umfassend:
wenn ein einzelnes UE eine Mehrzahl von Datenpaketen in dem MUSA-Ressourcenblock sendet, Übertragen der MUSA-Nummer des UE, das ein Datenpaket aufweist, das in dem angegebenen Funkressourcenblock korrekt empfangen worden ist, ferner Übertragen, in dem angegebenen Funkressourcenblock, einer Seriennummer des Datenpakets, das korrekt empfangen worden ist, so dass das jeweilige Senden der Mehrzahl von Datenpaketen durch das UE bestätigt wird.

3. Rückübertragungssteuerungsverfahren in einem gemeinsamen Mehrfachnutzerzugang-, MUSA-, Verfahren, wobei das MUSA-Verfahren umfasst: eine Mehrzahl von Nutzergeräten, UEs, nutzt eine orthogonale oder quasi-orthogonale Spreizungssequenz mit niedrigen Korrelationseigenschaften zum Spreizen von Daten und Senden der Daten auf einem orthogonalen Frequenzmultiplexverfahren-, OFDM-, Kanal, wobei das Verfahren umfasst:
Annehmen (201), durch eines der Mehrzahl von UEs, einer zugeordneten MUSA-Nummer;
Senden (202), durch das UE, eines Datenpakets zu einer Basisstation innerhalb eines Uplink-MUSA-Ressourcenbereichs, der durch die Basisstation angewiesen worden ist, wobei das Datenpaket die MUSA-Nummer trägt;
Empfangen (203), durch das UE, der MUSA-Nummer des UE, wobei die empfangene MUSA-Nummer durch die Basisstation in einem Funkressourcenblock, der durch eine MUSA-Radio Network Temporary Identity, MUSA-RNTI, angegeben wird, übertragen wird, wenn das gesendete Datenpaket korrekt empfangen worden ist; und
Bestimmen (204), durch das UE, gemäß der empfangenen MUSA-Nummer, ob das Datenpaket, das gesendet worden ist, rückübertragen werden soll;
**dadurch gekennzeichnet, dass** das Verfahren ferner umfasst:
Senden, durch das UE, wenn durch das UE erfasst wird, dass sich das UE aus einem effektiven Bereich für die MUSA-Nummer herausbewegt, einer MUSA-Nummer-Aktualisierungsanfragenachricht zu der Basisstation; und
Empfangen, durch das UE, einer MUSA-Nummer-Aktualisierungsannahmenachricht, die durch die Basisstation gesendet worden ist, wobei die MUSA-Nummer-Aktualisierungsannahmenachricht umfasst: eine neue zugeordnete MUSA-Nummer, einen effektiven Bereich einer neuen MUSA-Nummer, einen MUSA-Befähigungsindikator des UE und einen MUSA-Dienstbedarfindikator des UE, wobei der effektive Bereich eine Zelle oder ein Verfolgungsbereich oder eine Gruppe von Zellen oder Verfolgungsbereichen ist; und
Aktualisieren, durch das UE, der MUSA-Nummer gemäß der MUSA-Nummer-Aktualisierungsannahmenachricht.

4. Rückübertragungssteuerungsverfahren in einem MUSA-Verfahren nach Anspruch 3, ferner umfassend:
Auswählen einer MUSA-Spreizungssequenz gemäß der zugeordneten MUSA-Nummer zum Durchführen eines Uplink-Sendens des Datenpakets.

5. Rückübertragungssteuerungsverfahren in einem MUSA-Verfahren nach Anspruch 3, ferner umfassend:
wenn ein einzelnes UE eine Mehrzahl von Datenpaketen in einem MUSA-Ressourcenblock sendet, ferner Empfangen einer Seriennummer des Datenpakets neben dem Empfangen der MUSA-Nummer des UE, das ein korrekt empfangenes Datenpaket aufweist, das durch die Basisstation in dem Funkressourcenblock übertragen wird, der durch die MUSA-RNTI angegeben ist; und
Bestimmen, gemäß der empfangenen Seriennummer des Datenpakets, ob die Mehrzahl von Datenpaketen, die gesendet worden sind, rückübertragen werden soll.

6. Rückübertragungssteuerungsvorrichtung in einem gemeinsamen Mehrfachnutzerzugang-, MUSA-, Verfahren, wobei das MUSA-Verfahren umfasst: eine Mehrzahl von Nutzergeräten, UEs, nutzt eine orthogonale oder quasi-orthogonale Spreizungssequenz mit niedrigen Korrelationseigenschaften zum Spreizen von Daten und Senden der Daten auf einem orthogonalen Frequenzmultiplexverfahren-, OFDM-, Kanal, wobei die Rückübertragungssteuerungsvorrichtung in einer Basisstation angewandt wird und umfasst:
eine Zuordnungseinheit (11), die zum Zuordnen einer MUSA-Nummer zu jedem der Mehrzahl von UEs angeordnet ist;
eine Datenpaket-Empfangseinheit (12), die zum Empfangen eines Datenpakets, das durch eines der Mehrzahl von UEs innerhalb eines Uplink-MUSA-Ressourcenbereichs, der durch die Basisstation angewiesen worden ist, gesendet worden ist, angeordnet ist;
eine Angabeeinheit (13), die zum Angeben, unter Verwendung einer MUSA-Radio Network Temporary Identity, MUSA-RNTI, eines Funkressourcenblocks zum Senden von Bestätigungs-, ACK-, Informationen angeordnet ist; und
eine Übertragungseinheit (14), die zum Übertragen, in dem angegebenen Funkressourcenblock, der MUSA-Nummer eines UE, das ein Datenpaket gesendet hat, das korrekt empfangen worden ist, oder der MUSA-Nummer eines UE, das ein Datenpaket gesendet hat, das nicht korrekt empfangen worden ist, angeordnet ist, wobei es die Übertragung der MUSA-Nummer dem UE ermöglicht, gemäß der MUSA-Nummer zu bestimmen, ob das Datenpaket, das gesendet worden ist, rückübertragen werden soll;
**dadurch gekennzeichnet, dass** die Rückübertragungssteuerungsvorrichtung ferner umfasst:
eine Nachrichtempfangseinheit (15), die zum Empfangen einer MUSA-Nummer-Aktualisierungsanfragenachricht, die durch das UE gesendet worden ist, angeordnet ist; und
eine Nachrichtbeantwortungseinheit (16), die angeordnet ist zum: Senden einer MUSA-Nummer-Aktualisierungsannahmenachricht zu dem UE, wobei die MUSA-Nummer-Aktualisierungsannahmenachricht eine neue zugeordnete MUSA-Nummer, einen effektiven Bereich einer neuen MUSA-Nummer, einen MUSA-Befähigungsindikator des UE und einen MUSA-Dienstbedarfindikator des UE umfasst, wobei es die MUSA-Nummer-Aktualisierungsannahmenachricht dem UE ermöglicht, die MUSA-Nummer zu aktualisieren;
wobei der effektive Bereich eine Zelle oder ein Verfolgungsbereich oder eine Gruppe von Zellen oder Verfolgungsbereichen ist.

7. Rückübertragungssteuerungsvorrichtung in einem MUSA-Verfahren nach Anspruch 6, bei der
die Übertragungseinheit (14) ferner angeordnet ist, wenn ein einzelnes UE eine Mehrzahl von Datenpaketen in einem MUSA-Ressourcenblock sendet, neben dem Übertragen der MUSA-Nummer des UE, das ein Datenpaket aufweist, das in dem angegebenen Funkressourcenblock korrekt empfangen worden ist, zum Übertragen einer Seriennummer des Datenpakets, das in dem angegebenen Funkressourcenblock korrekt empfangen worden ist, so dass das jeweilige Senden der Mehrzahl von Datenpaketen durch das UE bestätigt wird.

8. Nutzergerät, UE, umfassend:
eine Annahmeeinheit (21), die zum Annehmen einer zugeordneten gemeinsamen Mehrfachnutzerzugang-, MUSA-, Nummer, die in einem MUSA-Verfahren verwendet wird, angeordnet ist, wobei das MUSA-Verfahren umfasst: eine Mehrzahl von Nutzergeräten, UEs, nutzt eine orthogonale oder quasi-orthogonale Spreizungssequenz mit niedrigen Korrelationseigenschaften zum Spreizen von Daten und Senden der Daten auf einem orthogonalen Frequenzmultiplexverfahren-, OFDM-, Kanal;
eine Datenpaket-Sendeeinheit (22), die zum Senden eines Datenpakets zu einer Basisstation innerhalb eines Uplink-MUSA-Ressourcenbereichs, der durch die Basisstation angewiesen worden ist, angeordnet ist, wobei das Datenpaket die MUSA-Nummer trägt;
eine Empfangseinheit (23), die zum Empfangen der MUSA-Nummer des UE angeordnet ist, die durch die Basisstation in einem Funkressourcenblock übertragen wird, der durch eine MUSA-Radio Network Temporary Identity, MUSA-RNTI, angegeben wird, wobei die empfangene MUSA-Nummer durch die Basisstation übertragen wird, wenn das gesendete Datenpaket korrekt empfangen worden ist; und
eine Rückübertragungseinheit (24), die zum Bestimmen, gemäß der empfangenen MUSA-Nummer, ob das Datenpaket, das gesendet worden ist, rückübertragen werden soll, angeordnet ist;
**dadurch gekennzeichnet, dass** das UE ferner umfasst:
eine Aktualisierungsanfrageeinheit (25), die zum Senden, wenn durch das UE erfasst wird, dass sich das UE aus einem effektiven Bereich für die MUSA-Nummer herausbewegt, einer MUSA-Nummer-Aktualisierungsanfragenachricht zu der Basisstation angeordnet ist;
eine Aktualisierungsannahmeeinheit (26), die zum Empfangen einer MUSA-Nummer-Aktualisierungsannahmenachricht, die durch die Basisstation gesendet worden ist, angeordnet ist, wobei die MUSA-Nummer-Aktualisierungsannahmenachricht umfasst: eine neue zugeordnete MUSA-Nummer, einen effektiven Bereich einer neuen MUSA-Nummer, einen MUSA-Befähigungsindikator des UE und einen MUSA-Dienstbedarfindikator des UE, wobei der effektive Bereich eine Zelle oder ein Verfolgungsbereich oder eine Gruppe von Zellen oder Verfolgungsbereichen ist; und
eine Aktualisierungseinheit (27), die zum Aktualisieren der MUSA-Nummer gemäß der MUSA-Nummer-Aktualisierungsannahmenachricht angeordnet ist.

9. UE nach Anspruch 8, bei dem
die Datenpaket-Sendeeinheit (22) ferner zum Auswählen einer MUSA-Spreizungssequenz gemäß der zugeordneten MUSA-Nummer zum Durchführen eines Uplink-Sendens des Datenpakets angeordnet ist.

10. UE nach Anspruch 8, bei dem
die Empfangseinheit (23) ferner, wenn ein einzelnes UE eine Mehrzahl von Datenpaketen in einem MUSA-Ressourcenblock sendet, zum Empfangen einer Seriennummer des Datenpakets neben dem Empfangen der MUSA-Nummer des UE angeordnet ist, das ein korrekt empfangenes Datenpaket aufweist, das durch die Basisstation in dem Funkressourcenblock übertragen wird, der durch die MUSA-RNTI angegeben wird; und
die Rückübertragungseinheit (24) ferner zum Bestimmen, gemäß der empfangenen Seriennummer des Datenpakets, ob die Mehrzahl von Datenpaketen, die gesendet worden sind, rückübertragen werden soll, angeordnet ist.

11. Speichermedium, wobei auf dem Speichermedium ein Computerprogramm gespeichert ist, das zum Ausführen der Schritte des Rückübertragungssteuerungsverfahrens, die durch eine Basisstation ausgeführt werden, in einem gemeinsamen Mehrfachnutzerzugang-, MUSA-, Verfahren nach einem der Ansprüche 1 bis 5 ausgebildet ist.

## Revendications

1. Procédé de commande de retransmission dans un processus d'accès partagé à utilisateurs multiples, MUSA, dans lequel le processus MUSA comprend : de multiples équipements utilisateurs, UE, emploient une séquence d'étalement orthogonale ou quasi orthogonale ayant des caractéristiques de faible corrélation pour étaler des données et transmettre les données sur un canal de multiplexage par répartition orthogonale de la fréquence, OFDM, le procédé comprenant :
l'allocation (101), par une entité de gestion de mobilité, MME, d'un numéro MUSA à chacun des multiples UE ;
la réception (102), par une station de base, d'un paquet de données envoyé par l'un des multiples UE au sein d'une plage de ressources MUSA de liaison montante renseignée par la station de base ;
l'indication (103), par la station de base, à l'aide d'une identité temporaire de réseau de radiocommunication MUSA, RNTI-MUSA, d'un bloc de ressources radio pour transmettre des informations d'accusé de réception, ACK ; et
la radiodiffusion (104), par la station de base, dans le bloc de ressources radio indiqué, du numéro MUSA d'un UE ayant envoyé un paquet de données qui est correctement reçu ou du numéro MUSA d'un UE ayant envoyé un paquet de données qui n'est pas correctement reçu, la radiodiffusion du numéro MUSA permettant à l'UE de déterminer s'il faut retransmettre le paquet de données qui a été envoyé ;
**caractérisé en ce que** le procédé comprend en outre :
la réception, par la station de base, d'un message de demande de mise à jour de numéro MUSA envoyé par l'UE ; et
l'envoi, par la station de base, d'un message d'acceptation de mise à jour de numéro MUSA à l'UE, le message d'acceptation de mise à jour de numéro MUSA comprenant : un nouveau numéro MUSA alloué, une plage effective d'un nouveau numéro MUSA, un indicateur de capacité MUSA de l'UE, et un indicateur de demande de service MUSA de l'UE, dans lequel la plage effective est une cellule ou une région de suivi, ou un groupe de cellules ou de régions de suivi ; et
dans lequel le message d'acceptation de mise à jour de numéro MUSA permet à l'UE de mettre à jour le numéro MUSA.

2. Procédé de commande de retransmission dans un processus MUSA selon la revendication 1, comprenant en outre :
lorsqu'un seul UE transmet une pluralité de paquets de données dans le bloc de ressources MUSA, la radiodiffusion du numéro MUSA de l'UE ayant un paquet de données qui est correctement reçu dans le bloc de ressources radio indiqué, la radiodiffusion en outre, dans le bloc de ressources radio indiqué, d'un numéro de série du paquet de données qui est correctement reçu, de façon à accuser réception d'une transmission de la pluralité de paquets de données par l'UE respectivement.

3. Procédé de commande de retransmission dans un processus d'accès partagé à utilisateurs multiples, MUSA, dans lequel le processus MUSA comprend : de multiples équipements utilisateurs, UE, emploient une séquence d'étalement orthogonale ou quasi orthogonale ayant des caractéristiques de faible corrélation pour étaler des données et transmettre les données sur un canal de multiplexage par répartition orthogonale de la fréquence, OFDM, le procédé comprenant :
l'acceptation (201), par l'un des multiples UE, d'un numéro MUSA alloué ;
l'envoi (202), par l'UE, d'un paquet de données à une station de base au sein d'une plage de ressources MUSA de liaison montante renseignée par la station de base, le paquet de données acheminant le numéro MUSA;
la réception (203), par l'UE, du numéro MUSA de l'UE, dans lequel le numéro MUSA reçu est radiodiffusé par la station de base dans un bloc de ressources radio indiqué par une identité temporaire de réseau de radiocommunication MUSA, RNTI-MUSA, lorsque le paquet de données envoyé est correctement reçu ; et
le fait de déterminer (204), par l'UE, selon le numéro MUSA reçu, s'il faut retransmettre le paquet de données qui a été envoyé ;
**caractérisé en ce que** le procédé comprend en outre :
l'envoi, par l'UE, lorsque l'UE détecte que l'UE se déplace hors d'une plage effective pour le numéro MUSA, d'un message de demande de mise à jour de numéro MUSA à la station de base ; et
la réception, par l'UE, d'un message d'acceptation de mise à jour de numéro MUSA envoyé par la station de base, le message d'acceptation de mise à jour de numéro MUSA comprenant : un nouveau numéro MUSA alloué, une plage effective d'un nouveau numéro MUSA, un indicateur de capacité MUSA de l'UE, et un indicateur de demande de service MUSA de l'UE, dans lequel la plage effective est une cellule ou une région de suivi, ou un groupe de cellules ou de régions de suivi ; et
la mise à jour, par l'UE, du numéro MUSA selon le message d'acceptation de mise à jour de numéro MUSA.

4. Procédé de commande de retransmission dans un processus MUSA selon la revendication 3, comprenant en outre :
la sélection d'une séquence d'étalement MUSA selon le numéro MUSA alloué pour réaliser une transmission en liaison montante du paquet de données.

5. Procédé de commande de retransmission dans un processus MUSA selon la revendication 3, comprenant en outre :
lorsqu'un seul UE transmet une pluralité de paquets de données dans un bloc de ressources MUSA, la réception en outre d'un numéro de série du paquet de données, en plus de la réception du numéro MUSA de l'UE ayant un paquet de données correctement reçu, qui est radiodiffusé par la station de base dans le bloc de ressources radio indiqué par la RNTI-MUSA; et
le fait de déterminer, selon le numéro de série reçu du paquet de données, s'il faut retransmettre la pluralité de paquets de données qui ont été envoyés.

6. Appareil de commande de retransmission dans un processus d'accès partagé à utilisateurs multiples, MUSA, dans lequel le processus MUSA comprend: de multiples équipements utilisateurs, UE, emploient une séquence d'étalement orthogonale ou quasi orthogonale ayant des caractéristiques de faible corrélation pour étaler des données et transmettre les données sur un canal de multiplexage par répartition orthogonale de la fréquence, OFDM, l'appareil de commande de retransmission est appliqué à une station de base et comprend :
une unité d'allocation (11) conçue pour allouer un numéro MUSA à chacun des multiples UE ;
une unité de réception de paquet de données (12) conçue pour recevoir un paquet de données envoyé par l'un des multiples UE au sein d'une plage de ressources MUSA de liaison montante renseignée par la station de base ;
une unité d'indication (13) conçue pour indiquer, à l'aide d'une identité temporaire de réseau de radiocommunication MUSA, RNTI-MUSA, un bloc de ressources radio pour transmettre des informations d'accusé de réception, ACK ; et
une unité de radiodiffusion (14) conçue pour radiodiffuser, dans le bloc de ressources radio indiqué, le numéro MUSA d'un UE ayant envoyé un paquet de données qui est correctement reçu ou le numéro MUSA d'un UE ayant envoyé un paquet de données qui n'est pas correctement reçu, la radiodiffusion du numéro MUSA permettant à l'UE de déterminer, selon le numéro MUSA, s'il faut retransmettre le paquet de données qui a été envoyé ;
**caractérisé en ce que** l'appareil de commande de retransmission comprend en outre :
une unité de réception de message (15) conçue pour recevoir un message de demande de mise à jour de numéro MUSA envoyé par l'UE; et
une unité de réponse de message (16) conçue pour : envoyer un message d'acceptation de mise à jour de numéro MUSA à l'UE, le message d'acceptation de mise à jour de numéro MUSA comprenant un nouveau numéro MUSA alloué, une plage effective d'un nouveau numéro MUSA, un indicateur de capacité MUSA de l'UE, et un indicateur de demande de service MUSA de l'UE, dans lequel le message d'acceptation de mise à jour de numéro MUSA permet à l'UE de mettre à jour le numéro MUSA;
dans lequel la plage effective est une cellule ou une région de suivi, ou un groupe de cellules ou de régions de suivi.

7. Appareil de commande de retransmission dans un processus MUSA selon la revendication 6, dans lequel
l'unité de radiodiffusion (14) est en outre conçue pour, lorsqu'un seul UE transmet une pluralité de paquets de données dans un bloc de ressources MUSA, en plus de la radiodiffusion du numéro MUSA de l'UE ayant un paquet de données qui est correctement reçu dans le bloc de ressources radio indiqué, radiodiffuser un numéro de série d'un paquet de données qui est correctement reçu dans le bloc de ressources radio indiqué, de façon à accuser réception d'une transmission de la pluralité de paquets de données par l'UE respectivement.

8. Équipement utilisateur, UE, comprenant :
une unité d'acceptation (21) conçue pour accepter un numéro d'accès partagé à utilisateurs multiples, MUSA, alloué utilisé dans un processus MUSA, dans lequel le processus MUSA comprend : de multiples UE emploient une séquence d'étalement orthogonale ou quasi orthogonale ayant des caractéristiques de faible corrélation pour étaler des données et transmettre les données sur un canal de multiplexage par répartition orthogonale de la fréquence, OFDM ;
une unité d'envoi de paquet de données (22) conçue pour envoyer un paquet de données à une station de base au sein d'une plage de ressources MUSA de liaison montante renseignée par la station de base, le paquet de données acheminant le numéro MUSA;
une unité de réception (23) conçue pour recevoir le numéro MUSA de l'UE qui est radiodiffusé par la station de base dans un bloc de ressources radio indiqué par une entité temporaire de réseau de radiocommunication MUSA, RNTI-MUSA, dans lequel le numéro MUSA reçu est radiodiffusé par la station de base lorsque le paquet de données envoyé est correctement reçu ; et
une unité de retransmission (24) conçue pour déterminer, selon le numéro MUSA reçu, s'il faut retransmettre le paquet de données qui a été envoyé ;
**caractérisé en ce que** l'UE comprend en outre :
une unité de demande de mise à jour (25) conçue pour envoyer, lorsque l'UE détecte que l'UE se déplace hors d'une plage effective pour le numéro MUSA, un message de demande de mise à jour de numéro MUSA à la station de base ;
une unité d'acceptation de mise à jour (26) conçue pour recevoir un message d'acceptation de mise à jour de numéro MUSA envoyé par la station de base, le message d'acceptation de mise à jour de numéro MUSA comprenant : un nouveau numéro MUSA alloué, une plage effective d'un nouveau numéro MUSA, un indicateur de capacité MUSA de l'UE, et un indicateur de demande de service MUSA de l'UE, dans lequel la plage effective est une cellule ou une région de suivi, ou un groupe de cellules ou de régions de suivi ; et
une unité de mise à jour (27) conçue pour mettre à jour le numéro MUSA selon le message d'acceptation de mise à jour de numéro MUSA.

9. UE selon la revendication 8, dans lequel
l'unité d'envoi de paquet de données (22) est en outre conçue pour sélectionner une séquence d'étalement MUSA selon le numéro MUSA alloué pour réaliser une transmission en liaison montante du paquet de données.

10. UE selon la revendication 8, dans lequel
l'unité de réception (23) est en outre conçue pour, lorsqu'un seul UE transmet une pluralité de paquets de données dans un bloc de ressources MUSA, recevoir en outre un numéro de série du paquet de données en plus de la réception du numéro MUSA de l'UE ayant un paquet de données correctement reçu, qui est radiodiffusé par la station de base dans le bloc de ressources radio indiqué par la RNTI-MUSA; et
l'unité de retransmission (24) est en outre conçue pour déterminer, selon le numéro de série reçu du paquet de données, s'il faut retransmettre la pluralité de paquets de données qui ont été envoyés.

11. Support de stockage, dans lequel, le support de stockage a un programme d'ordinateur stocké sur celui-ci conçu pour exécuter les étapes de procédé de commande de retransmission réalisées par une station de base dans un processus d'accès partagé à utilisateurs multiples, MUSA, selon l'une quelconque des revendications 1 à 5.
